# EUROPÄISCHE PATENTSCHRIFT

(11) **EP 2 225 477 B1**
(45) Veröffentlichungstag und Bekanntmachung des Hinweises auf die Patenterteilung: **09.01.2013**
(21) Anmeldenummer: 08866861.1
(22) Anmeldetag: 10.11.2008
(51) Int. Cl.: F16C 43/06, F16C 33/36

(54) **VERFAHREN ZUM BEFÜLLEN EINES KUGELROLLENLAGERS MIT WÄLZKÖRPERN SOWIE NACH DEM VERFAHREN BEFÜLLTES KUGELROLLENLAGER**
METHOD FOR FILLING A BALL ROLLER BEARING WITH ROLL BODIES AS WELL AS A BALL ROLLER BEARING FILLED ACCORDING TO THE METHOD
PROCÉDÉ DE REMPLISSAGE D'UN ROULEMENT À BILLES AVEC DES CORPS DE ROULEMENT, ET ROULEMENT À BILLES REMPLI SUIVANT CE PROCÉDÉ

(30) Priorität: 21.12.2007 DE 102007062319
(43) Veröffentlichungstag der Anmeldung: 08.09.2010
(73) Patentinhaber: Schaeffler Technologies AG & Co. KG, 91074 Herzogenaurach (DE)
(72) Erfinder: GEIGER, Ernst, 91352 Hallerndorf (DE); HOFMANN, Heinrich, 97422 Schweinfurt (DE); MUSER, Joachim, 91710 Gunzenhausen (DE); DÖPPLING, Horst, 91074 Herzogenaurach (DE)
(86) Internationale Anmeldenummer: PCT/EP2008/065203
(87) Internationale Veröffentlichungsnummer: WO 2009/083320

(56) Entgegenhaltungen:
- DE-A1-102005 061 792

## Beschreibung

### Gebiet der Erfindung

Die Erfindung betrifft ein Verfahren zum Befüllen eines mit den Merkmalen des Oberbegriffs des Patentanspruchs 1 ausgebildeten Kugelrollenlagers mit Wälzkörpern, sowie ein nach dem Verfahren befülltes Kugelrollenlager, welches beispielsweise besonders vorteilhaft als Festlager für die An- und Abtriebswelle eines Kfz-Schaltgetriebes einsetzbar ist.

### Hintergrund der Erfindung

In der Wälzlagertechnik ist es allgemein bekannt, dass Rillenkugellager starre, nicht zerlegbare Radialwälzlager sind, die sich vor allem durch eine gleichermaßen hohe radiale und axiale Tragfähigkeit auszeichnen und wegen ihrer geringen Reibung die höchsten Drehzahlgrenzen aller Lagerarten aufweisen. Diese Rillenkugellager bestehen im Wesentlichen aus einem äußeren Lagerring und einem inneren Lagerring sowie aus einer Anzahl zwischen den Lagerringen angeordneten Kugeln als Wälzkörpern, die auf in die Innenseite des äußeren Lagerrings und in die Außenseite des inneren Lagerrings eingearbeitete rillenförmigen Kugellaufbahnen abrollen und durch einen Lagerkäfig in gleichmäßigen Abständen zueinander geführt werden. Das Befüllen von Radialkugellagern mit den Kugeln erfolgt dabei durch das mit der DE 168 499 bekannt gewordene Exzentermontageverfahren, bei dem die beiden Lagerringe exzentrisch zueinander angeordnet werden und der dadurch entstehende sichelförmige freie Raum zwischen den Lagerringen mit den Kugeln befüllt wird. Größe und Anzahl der Kugeln sind entsprechend der Lagergröße jeweils so bemessen, dass der innere Lagerring zwischen erster und letzter Kugel unter Ausnutzung der Elastizität beider Lagerringe in die zum äußeren Lagerring konzentrische Stellung gebracht werden kann, so dass die Kugeln abschließend auf dem Teilkreis der beiden Kugellaufbahnen mit gleichmäßigem Abstand zueinander verteilt und der Lagerkäfig eingesetzt werden kann.

In der Praxis hat es sich jedoch erwiesen, dass derartigen Rillenkugellagern aufgrund der geringen maximal einbaubaren Anzahl von Kugeln bzw. des geringen maximalen Füllgrades von ca. 60% in Bezug auf die Tragfähigkeit des Lagers dennoch Grenzen gesetzt sind. In der Vergangenheit wurden daher eine Vielzahl von Lösungen, wie beispielsweise eine in den sich gegenüberliegenden Borden des äußeren und des inneren Lagerrings angeordnete unverschlossene Einfüllöffnung gemäß DE 151 483 oder eine ähnlich ausgebildete verschließbare Einfüllöffnung gemäß DE 24 07 477 A1, vorgeschlagen, mit denen durch eine Erhöhung der Anzahl der Kugeln eine Erhöhung des Füllgrades und damit der Tragfähigkeit von Rillenkugellagern erreicht werden sollte. Solche Einfüllöffnungen haben jedoch sowohl in der unverschlossenen als auch in der verschlossenen Ausführung den Nachteil, dass es durch deren keilförmige Einmündung in die Laufbahnen der Kugeln oder durch Grate zu einem "Hängen bleiben" oder Verklemmen der Wälzkörper an dieser Einfüllöffnung kommen kann, so dass sich derartige Lösungen in der Praxis nicht durchsetzen konnten.

Eine andere Möglichkeit, die Anzahl der Wälzkörper an einem Radialwälzlager zu erhöhen, ist darüber hinaus durch die DE 43 34 195 A1 bekannt geworden. Bei diesem, an sich als einreihiges Rillenkugellager ausgebildeten Radialwälzlager werden die Wälzkörper jedoch nicht durch Kugeln sondern durch so genannte Kugelrollen gebildet, die mit zwei symmetrisch von einer Kugelgrundform abgeflachten sowie parallel zueinander angeordneten Seitenflächen ausgebildet sind. Die Breite dieser Kugelrollen zwischen deren Seitenflächen ist dabei kleiner als der Abstand zwischen der Innenseite des äußeren Lagerrings und Außenseite des inneren Lagerrings ausgebildet, so dass das Befüllen des Lagers mit den Kugelrollen im so genannten Axialmontageverfahren erfolgen kann, bei dem die Kugelrollen quasi liegend axial durch den Abstand zwischen dem inneren und dem äußeren Lagerring in das Lager eingeführt werden können. Wenn sich der Mittelpunkt der Kugelrollen dann auf der Höhe der Wälzkörperlaufbahnachse befindet, werden die Kugelscheiben um 90° gedreht, so dass sie mit ihren Kugellaufflächen in den Wälzkörperlaufbahnen abrollen können.

Trotz der Möglichkeit, diese speziell ausgebildeten Kugelrollen axial in das Lager einzusetzen und das Radialwälzlager dadurch mit einer hohen Anzahl an Wälzkörpern ausfüllen zu können, stellt ein solches Radialwälzlager im Hinblick auf die angestrebte Erhöhung der Tragfähigkeit des Lagers jedoch allenfalls nur einen Kompromiss dar. Dies ist in der Tatsache begründet, dass die Kugelrollen wegen ihrer axialen Einführbarkeit in das Lager nur mit einer entsprechend kleinen Breite zwischen ihren Seitenflächen ausgebildet werden können, um problemlos durch den Abstand zwischen innerem und äußerem Lagerring in das Lager eingeführt werden zu können. Ebenso können die Wälzkörperlaufbahnen in den Lagerringen nur relativ flach und schmal ausgebildet werden, um das Drehen der Wälzkörper in ihre Betriebslage ermöglichen zu können, ohne dass in dieser Betriebslage ein zu hohes Radialspiel im gesamten Lager entsteht. Die relativ schmalen Kugelrollen und die flachen Wälzkörperlaufbahnen bewirken jedoch eine relativ kleine Kontaktfläche der Kugelrollen zu ihren Wälzkörperlaufbahnen, so dass sich sowohl die axiale als auch die radiale Tragfähigkeit eines solchen Radiallagers wieder verringert und der ursprüngliche Vorteil der erhöhten Anzahl von Wälzkörpern nahezu kompensiert wird.

Zur Vermeidung dieser Nachteile wurde es deshalb durch die DE 10 2005 014 556 A1 vorgeschlagen, die Breite der Kugelrollen zwischen deren Seitenflächen auf mindestens 70% des Durchmessers ihrer Kugelgrundform zu vergrößern und die rillenförmigen Laufbahnen in den Lagerringen mit einer Tiefe von etwa 19% sowie einer Breite von etwa 75% des Durchmessers der Kugelgrundform der Kugelrollen auszubilden, da damit eine Gesamtkontaktfläche der Kugelrollen zu ihren Laufbahnen von etwa 45% des Umfangs der Kugelgrundform der Kugelrollen entsteht, die auch die Kugeln herkömmlicher Rillenkugellager zu ihren Laufbahnen in den Lagerringen aufweisen. Da der Abstand zwischen der Außenseite des inneren Lagerrings und der Innenseite des äußeren Lagerrings sich dadurch jedoch auf etwa 60% des Durchmessers der Kugelgrundform der Kugelrollen verringert und somit kleiner als die Breite der Kugelrollen ist, wurde deren Einsetzen in das Radialwälzlager wieder durch das Exzentermontageverfahren realisiert, bei dem die Kugelrollen mit ihren Seitenflächen aneinander anliegend in den freien Raum zwischen den beiden exzentrisch zueinander angeordneten Lagerringen quer in die Laufbahnen eingelegt werden, anschließend der innere Lagerring in die zum äußeren Lagerring konzentrische Stellung gebracht wird und abschließend die Kugelrollen auf dem Teilkreis ihrer Laufbahnen mit gleichmäßigem Abstand zueinander verteilt und um 90° verschwenkt werden. Die abgeflachten Seitenflächen der Kugelrollen ermöglichten es dabei, dass auch mit dem Exzentermontageverfahren eine gegenüber einreihigen Rillenkugellagern erhöhte Anzahl an Wälzkörpern mit einem Füllgrad von 73% in das Kugelrollenlager einfüllbar ist.

Mit einem derart ausgebildeten Kugelrollenlager wurde zwar erreicht, dass die Kugelrollen ähnlich wie die Kugeln eines Rillenkugellagers große Kontaktflächen zu ihren Laufbahnen in den Lagerringen aufweisen und dass das Kugelrollenlager mit einer höheren Anzahl an Wälzkörpern bzw. mit einem höheren Füllgrad als herkömmliche einreihige Rillenkugellager bestückt werden kann, dennoch mussten bedingt durch das Exzentermontageverfahren hinsichtlich der Anzahl der Wälzkörper Abstriche gegenüber der im Axialmontageverfahren möglichen höheren Wälzkörperanzahl gemacht werden. Somit konnte gegenüber herkömmlichen Rillenkugellagern zwar der axiale Bauraum und das Gewicht des Kugelrollenlagers verringert und dessen Axialbelastbarkeit erhöht werden, die Erhöhung der radialen Tragfähigkeit des Kugelrollenlagers fiel jedoch vergleichsweise gering aus.

### Aufgabe der Erfindung

Ausgehend von den dargelegten Nachteilen der Lösungen des bekannten Standes der Technik liegt der Erfindung deshalb die Aufgabe zu Grunde, ein Verfahren zum Befüllen eines Kugelrollenlagers mit Wälzkörpern zu konzipieren, mit dem ein mit ähnlichen Laufbahnabmessungen wie ein vergleichbares Rillenkugellager ausgebildetes Kugelrollenlager mit einer wesentlich höheren Anzahl an Kugelrollen befüllt werden kann, so dass sich ein nach diesem Verfahren befülltes Kugelrollenlager vor allem durch eine höhere radiale Tragfähigkeit und durch eine wesentlich gesteigerte Lebensdauer auszeichnet.

### Beschreibung der Erfindung

Erfindungsgemäß wird diese Aufgabe bei einem Kugelrollenlager mit den Merkmalen des Oberbegriff des Anspruchs 1 sowie in der DE 10 2005 061 792 offenbart durch ein Axial-Kipp-Exzentermontage-verfahren der Kugelrollen durch den Abstand zwischen den Lagerringen hindurch gelöst, bei welchem der innere Lagerring der beiden in liegender konzentrischer Stellung zueinander angeordneten Lagerringe zur Herstellung eines größer als die Breite der Kugelrollen ausgebildeten Abstandes zwischen den Lagerringen zum einen entlang einer Lagerlängsmittelachse radial geringfügig beweglich sowie zum anderen auf einer axial versetzt höheren Ebene als der äußere Lagerring angeordnet ist und das Einfüllen der Kugelrollen durch folgende weitere Schritte erfolgt:
a) radiales Verschieben des inneren Lagerrings in eine exzentrische Anschlagstellung und Zuführen der mit ihren Seitenflächen zu den Lagerringen ausgerichteten Kugelrollen an die als Einfüllstelle vorgesehene Stelle des größten Abstandes zwischen den Lagerringen auf der Lagerlängsmittelachse;
b) aufeinander folgendes Einführen der Kugelrollen in einer zum äußeren Lagerring leicht angekippten Stellung in die Einfüllstelle zwischen den Lagerringen bis der verbleibende freie Füllraum zwischen den Lagerringen nur noch etwa dem Durchmesser der Kugelgrundform einer einzelnen Kugelrolle entspricht;
c) axiales Absenken des inneren Lagerrings und gleichzeitiges axiales Anheben des äußeren Lagerrings in eine Stellung, in der die Lagerringe in einer gemeinsamen Ebene angeordnet und die in die Laufbahnen der Lagerringe gekippten Kugelrollen zwischen den Laufbahnen eingespannt sind;
d) rotative Beschleunigung des äußeren Lagerrings auf eine Drehzahl, bei der die Kugelrollen durch Eigenrotation und durch Fliehkraft sich selbsttätig aufrichten und eine gleichmäßig schräge Stellung innerhalb der Laufbahnen der Lagerringe einnehmen;
e) Anhalten des äußeren Lagerrings und gleichzeitiges axiales Absenken des inneren und des äußeren Lagerrings bis die Kugelrollen in einer horizontal geraden Stellung in den Laufbahnen der Lagerringe angeordnet sind;
f) gleichmäßiges Verteilen der eingefüllten Kugelrollen auf dem Teilkreis des Kugelrollenlagers und Einsetzen des Lagerkäfigs durch den Abstand zwischen den Lagerringen hindurch mit abschließender Befettung und optionaler Abdichtung des Kugelrollenlagers.

Bevorzugte Ausgestaltungen und vorteilhafte Nebenbedingungen des erfindungsgemäßen Verfahrens werden in den Unteransprüchen beschrieben.

Danach ist es gemäß den Ansprüchen 2 und 3 bei dem erfindungsgemäßen Verfahren vorgesehen, dass zunächst eine erste Kugelrolle einzeln in die Einfüllstelle zwischen den Lagerringen eingeführt wird und diese Kugelrolle dann als Einfüllhilfe für die übrigen Kugelrollen in der Einfüllstelle verbleibt, um das weitere Zu- und Einführen der übrigen Kugelrollen bevorzugt paarweise durchzuführen. Beim paarweisen Einführen der übrigen Kugelrollen hat es sich dabei als besonders vorteilhaft erwiesen, diese mit ihren Laufflächen beidseitig auf der Lauffläche der ersten Kugelrolle entlang gleitend in den Abstand zwischen den Lagerringen einzudrücken, so dass die jeweils zuvor eingefüllten Kugelrollen gleichmäßig in den noch freien Füllraum zwischen den Lagerringen verdrängt werden. Der Vorteil der weiteren paarweisen Befüllung des Kugelrollenlagers liegt dabei in einer Verkürzung der Montagezeit und damit der Montagekosten, wobei es bei bestimmten Lagertypen jedoch auch vorteilhaft sein kann, auch die übrigen Kugelrollen einzeln in das Kugelrollenlager einzufüllen. In solchen Fällen ist es vorteilhaft, zunächst zwei Kugelrollen in die Einfüllstelle zwischen den Lagerringen einzuführen und alle weiteren Kugelrollen dann zwischen die beiden in der Einfüllstelle befindlichen Kugelrollen mit ihrer Lauffläche auf den Laufflächen der beiden in der Einfüllstelle befindlichen Kugelrollen entlang gleitend in den Abstand zwischen den Lagerringen einzudrücken, so dass auch hier die jeweils zuvor eingefüllten Kugelrollen gleichmäßig in den noch freien Füllraum zwischen den Lagerringen verdrängt werden.

Nach Anspruch 4 ist es ein weiteres Merkmal des erfindungsgemäßen Verfahrens, dass der Weg der radialen Verschiebbarkeit des inneren Lagerrings auf der Lagerlängsmittelachse sowie die Höhe des axialen Versatzes der beiden Lagerringe zueinander jeweils etwa 25% der Breite der Laufbahnen des Kugelrollenlagers beträgt. Die Größe dieser beiden Verfahrensparameter hat sich dabei dahingehend als ausreichend erwiesen, dass durch deren Zusammenwirken gewährleistet ist, dass vom Einfüllen der ersten Kugelrolle bis zum Einfüllen der letzten Kugelrolle der Abstand zwischen den Lagerringen zumindest an der Einfüllstelle immer größer als die Breite der Kugelrollen ist. Da es zur Herstellung eines größer als die Breite der Kugelrollen ausgebildeten Abstandes zwischen den Lagerringen für das Einfüllen der ersten Kugelrolle im Grunde jedoch bereits ausreichend ist, den inneren Lagerring ohne axial versetzte Anordnung zum äußeren Lagerring lediglich durch radiales Verschieben in seine exzentrische Anschlagstellung zu bringen, ist es alternativ zu dieser von Beginn der Montage an versetzten Anordnung der beiden Lagerringe auch möglich, den inneren Lagerring erst mit fortschreitender Befüllung des Kugelrollenlagers mit Kugelrollen auf eine axial höhere Ebene anzuheben.

Gemäß Anspruch 5 zeichnet sich das erfindungsgemäße Verfahren darüber hinaus noch dadurch aus, dass die axial höhenversetzte Anordnung beider Lagerringe bevorzugt auf einer zur Einfüllstelle der Kugelrollen hin geneigten Ebe-ne erfolgt. Damit soll erreicht werden, dass sämtliche bereits eingefüllte Kugelrollen im Abstand zwischen den Lagerringen durch Schwerkraft eine geordnet aneinander anliegende Reihe bilden und nicht durch die beim Einfüllen weiterer Kugelrollen eingebrachte Schubkraft unkontrolliert in den freien Füllraum wegrollen bzw. sich querstellen. Alternativ zu einer solchen Anordnung beider Lagerringe auf einer geneigten Ebene ist es jedoch auch möglich, die Lagerringe auf einer geraden Ebenen anzuordnen und das geordnete Aneinanderanliegen der eingefüllten Kugelrollen im Abstand zwischen den Lagerringen durch die Kraft einer Feder zu realisieren, die jeweils an den ersten beiden der in den freien Füllraum verdrängten Kugelrollen anliegt und nach dem Einfüllen der letzten Kugelrolle wieder entfernt wird.

Eine zweckmäßige Weiterbildung des erfindungsgemäßen Verfahrens ist es nach Anspruch 6 desweiteren, dass zum zwischenzeitlichen Halten der eingefüllten Kugelrollen sowie zu deren horizontal gerader Ausrichtung im Abstand zwischen den Lagerringen eine zwischen den Lagerringen angeordnete ringförmige Stützebene verwendet wird. Diese Stützebene ist in einer Ebene mit der unteren Laufbahnkante des äußeren Lagerrings angeordnet und bewirkt dadurch, dass die eingefüllten Kugelrollen nicht zwischen den Lagerringen hindurch rutschen sondern nach dem anfänglichen Entlanggleiten auf sowie dem Herausgleiten aus der Laufbahn des inneren Lagerrings auf dieser Stützebene so aufsetzen, dass die Kugelrollen mit ihren Laufflächen selbsttätig in beide Laufbahnen der Lagerringe hinein kippen und beim Einfüllen der weiteren Kugelrollen in dieser Stellung auf der Stützebene entlang in den beidseitig der Einfüllstelle angeordneten freien Füllraum rollen. Mit zunehmender Anzahl der eingefüllten Kugelrollen wird dabei der innere Lagerring durch die Kugelrollen aus seiner anfänglichen exzentrischen Anschlagstellung allmählich zurück geschoben, so dass nach dem Einfüllen der letzten Kugelrolle der radiale Versatz des inneren Lagerrings komplett aufgehoben ist und beide Lagerringe wieder konzentrisch zueinander angeordnet sind. Darüber hinaus hat sich diese Stützebene als sehr hilfreich erwiesen, wenn nach der rotativen Beschleunigung des äußeren Lagerrings beide Lagerringe axial abgesenkt werden, um die eingefüllten Kugelrollen in eine horizontal gerade Stellung in den Laufbahnen zu bewegen, da diese Stützebene dann durch das axiale Absenken der Lagerringe derart in das Innere des Kugelrollenlagers hineinragt, dass sie eine Auflagefläche für die nunmehr mit einer Seitenfläche auf dieser aufliegenden Kugelrollen bildet, durch welche die Kugelrollen horizontal ausgerichtet werden und ein Verdrehen der Kugelrollen beim anschließenden Einsetzen des Lagerkäfigs vermieden wird.

Schließlich wird die Aufgabe der Erfindung auch durch ein nach dem erfindungsgemäßen Verfahren befülltes Kugelrollenlager gemäß den Ansprüchen 7 und 8 gelöst, da dieses sich nunmehr durch eine so hohe Anzahl eingefüllter Kugelrollen auszeichnet, dass bei aneinander anliegend angeordneten Kugelrollen der Abstand zwischen einer ersten Kugelrolle und einer letzten Kugelrolle nur noch etwa dem Durchmessers der Kugelgrundform einer einzelnen Kugelrolle entspricht. Dadurch weist das Kugelrollenlager, ausgehend von einem Füllgrad von ca. 60% für ein baugleiches Rillenkugellager, einen Füllgrad von bis zu ca. 94% auf, was wiederum zur Folge hat, dass vor allem dessen radiale Tragfähigkeit wesentlich gesteigert werden konnte und dessen Lebensdauer, ausgehend von einer Lebensdauer von 100% für ein baugleiches Rillenkugellager, nunmehr bis zu 253 % beträgt. Der entscheidende Vorteil eines mit dem erfindungsgemäßen Verfahren befüllten Kugelrollenlagers gegenüber den aus dem Stand der Technik bekannten Kugelrollenlagern ist somit darin zu sehen, dass es trotz tief ausgebildeter Laufbahnen in den Lagerringen, durch die eine hohe Axialbelastbarkeit des Kugelrollenagers gewährleistet ist, und trotz eines dadurch kleiner als die Breite der Kugelrollen ausgebildeten Abstandes zwischen den Lagerringen einen Füllgrad aufweist, der bisher nur mit im Axialmontageverfahren montierten Kugelrollenlagern erreichbar war, bei denen die Kugelrollen wesentlich schmaler ausgebildet sind sowie auf wesentlich flacheren Laufbahnen abrollen und bei denen der Abstand zwischen den Lagerringen größer als die Breite der Kugelrollen ist.

### Kurze Beschreibung der Zeichnungen

Das erfindungsgemäße Verfahren sowie eine bevorzugte Ausführungsform eines nach diesem Verfahren befüllten Kugelrollenlagers werden nachfolgend unter Bezugnahme auf die beigefügten Zeichnungen näher erläutert. Dabei zeigen:
- Figur 1: eine vergrößerte Darstellung einer Draufsicht auf ein mit dem erfindungsgemäßen Verfahren befülltes Kugelrollenlager;
- Figur 2: den Querschnitt A - A durch das mit dem erfindungsgemäßen Verfahren befüllte Kugelrollenlager gemäß Figur 1;
- Figur 3: eine vergrößerte Darstellung der Einzelheit Z des Querschnittes durch das Kugelrollenlager gemäß Figur 2;
- Figur 4: einen Querschnitt und eine Draufsicht auf das Kugelrollenlager während des ersten Verfahrensschrittes zu dessen Befüllung;
- Figur 5: einen Querschnitt und eine Draufsicht auf das Kugelrollenlager während des zweiten Verfahrensschrittes zu dessen Befüllung;
- Figur 6: einen Querschnitt und eine Draufsicht auf das Kugelrollenlager zur Veranschaulichung einer Zwischenposition der ersten eingefüllten Kugelrolle nach dem zweiten Verfahrensschritt;
- Figur 7: einen Querschnitt und eine Draufsicht auf das Kugelrollenlager zur Veranschaulichung der Endposition der ersten eingefüllten Kugelrolle nach dem zweiten Verfahrensschritt;
- Figur 8: eine Draufsicht auf das Kugelrollenlager zur Veranschaulichung der Endposition von drei eingefüllten Kugelrollen nach dem zweiten Verfahrensschritt;
- Figur 9: eine Draufsicht auf das Kugelrollenlager zur Veranschaulichung der Endposition von fünf eingefüllten Kugelrollen nach dem zweiten Verfahrensschritt;
- Figur 10: einen Querschnitt und eine Draufsicht auf das Kugelrollenlager zur Veranschaulichung der Endposition aller eingefüllten Kugelrollen nach dem zweiten Verfahrensschritt;
- Figur 11: einen Querschnitt und eine Draufsicht auf das Kugelrollenlager während des dritten Verfahrensschrittes zu dessen Befüllung;
- Figur 12: einen Querschnitt und eine Draufsicht auf das Kugelrollenlager während des vierten Verfahrensschrittes zu dessen Befüllung;
- Figur 13: einen Querschnitt und eine Draufsicht auf das Kugelrollenlager während des fünften Verfahrensschrittes zu dessen Befüllung;
- Figur 14: einen Querschnitt und eine Draufsicht auf das Kugelrollenlager während des letzten Verfahrensschrittes zu dessen Befüllung.

### Ausführliche Beschreibung der Zeichnungen

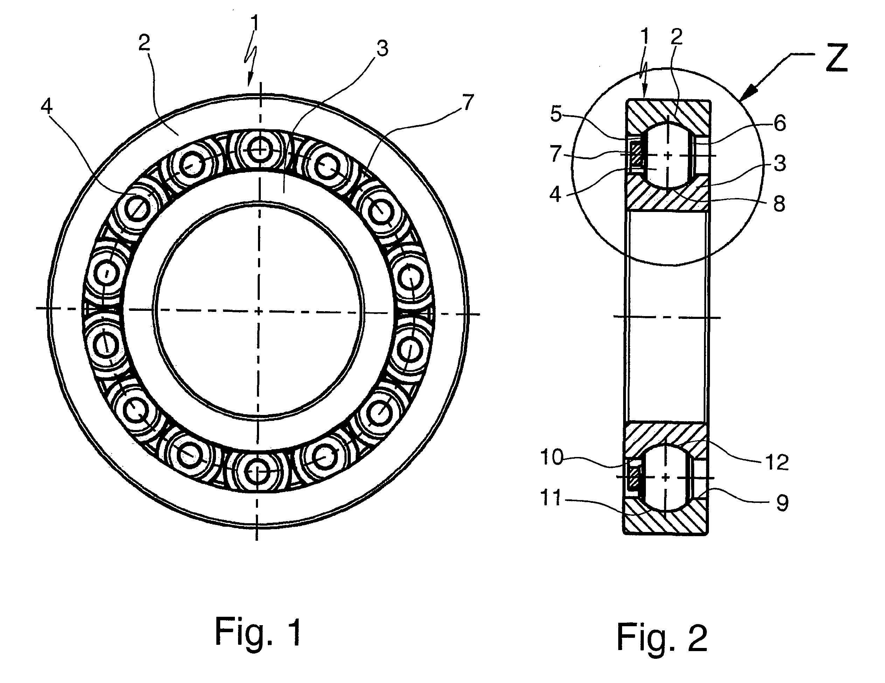

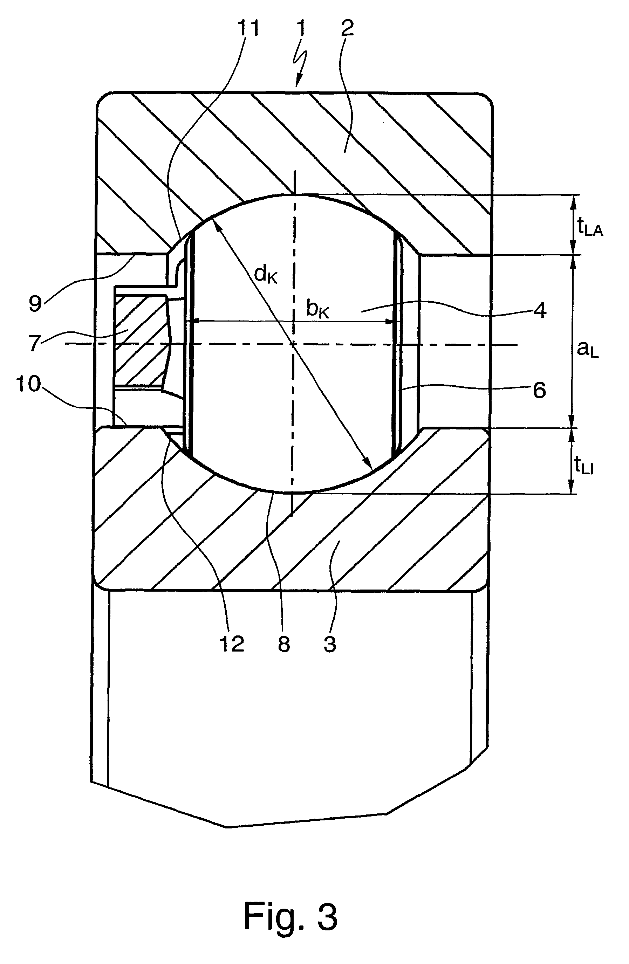

Aus den Figuren 1, 2 und 3 gehen verschiedene Ansichten eines einreihigen Kugelrollenlagers 1 hervor, welches im Wesentlichen aus einem äußeren Lagerring 2 und einem inneren Lagerring 3 sowie aus einer Vielzahl zwischen diesen Lagerringen 2, 3 in einer Reihe angeordneter Kugelrollen 4 besteht, die jeweils zwei symmetrisch von einer Kugelgrundform abgeflachte, parallel zueinander angeordnete Seitenflächen 5, 6 aufweisen und durch einen Lagerkäfig 7 in Umfangsrichtung in gleichmäßigen Abständen zueinander gehalten werden. Durch Figur 3 wird dabei deutlich, dass diese Kugelrollen 4 zwischen ihren Seitenflächen 5, 6 eine Breite b_{K} von etwa 70% des Durchmessers d_{K} ihrer Kugelgrundform aufweisen und mit ihren Laufflächen 8 in zwei in die Innenseite 9 des äußeren Lagerrings 2 und in die Außenseite 10 des inneren Lagerrings 3 eingearbeitete rillenförmigen Laufbahnen 11, 12 abrollen, deren Tiefe t_{LA}, t_{LI} mit ca. 20% des Durchmessers d_{K} der Kugelgrundform der Kugelrollen 4 bemessen ist und somit eine zu einem baugleichen Rillenkugellager adäquate hohe Axialbelastbarkeit des Kugelrollenlagers 1 gewährleisten. Der Abstand a_{L} zwischen der Innenseite 9 des äußeren Lagerrings 2 und der Außenseite 10 des inneren Lagerrings 3 beträgt durch die tiefe Ausbildung der Laufbahnen 11, 12 somit nur noch etwa 60% des Durchmessers d_{K} der Kugelgrundform der Kugelrollen 4, und ist dadurch kleiner als die Breite b_{K} der Kugelrollen 4 ausgebildet.
Die wesentliche Neuerung an dem dargestellten Kugelrollenlager 1 besteht darin, dass es, wie aus Figur 1 ersichtlich ist, im Gegensatz zu Rillenkugellagern oder anderen bekannten Kugelrollenlagern eine so hohe Anzahl an Kugelrollen 4 aufweist, dass bei aneinander anliegend angeordneten Kugelrollen 4 der Abstand zwischen einer ersten Kugelrolle 4 und einer letzten Kugelrolle 4 kleiner als der Durchmesser d_{K} der Kugelgrundform einer einzelnen Kugelrolle 4 ist. Ausgehend von einem Füllgrad von ca. 60% für ein baugleiches Rillenkugellager, weist dieses Kugelrollenlager somit einen Füllgrad von ca. 94% auf, so dass dessen Radialbelastbarkeit um ein vielfaches höher ist und dessen Lebensdauer, ausgehend von einer Lebensdauer von 100% für ein baugleiches Rillenkugellager, rechnerisch etwa 253 % beträgt.

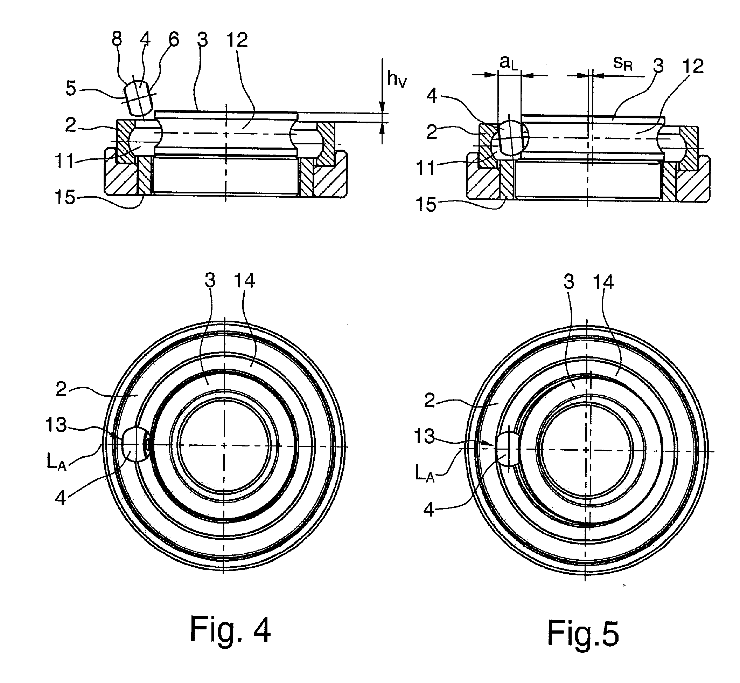

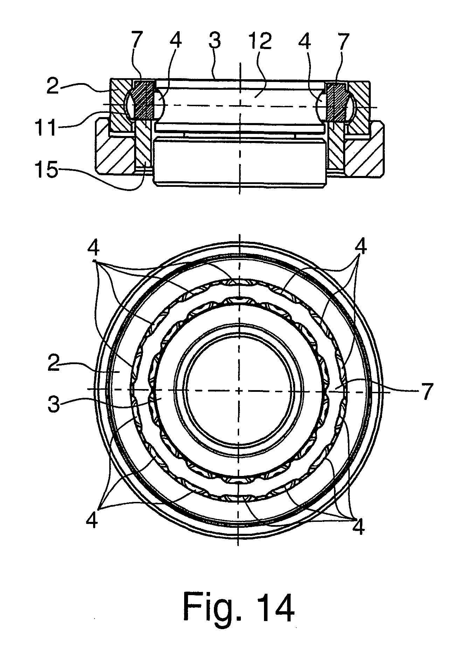

In den Figuren 4 bis 14 ist im Weiteren das Verfahren zum Befüllen des Kugelrollenlagers 1 mit dieser hohen Anzahl an Kugelrollen 4 schematisch dargestellt. Dieses Verfahren ist als Axial-Kipp-Exzentermontageverfahren der Kugelrollen 4 durch den Abstand a_{L} zwischen den Lagerringen 2, 3 hindurch ausgebildet, bei welchem, wie die Figuren 4 bis 7 zeigen, der innere Lagerring 3 der beiden in liegender konzentrischer Stellung zueinander angeordneten Lagerringe 2, 3 zur Herstellung eines größer als die Breite b_{K} der Kugelrollen 4 ausgebildeten Abstandes a_{L} zwischen den Lagerringen 2, 3 zunächst zum einen entlang einer Lagerlängsmittelachse L_{A} radial geringfügig beweglich sowie zum anderen auf einer axial versetzt höheren Ebene als der äußere Lagerring 2 angeordnet ist. Der Weg sᵣ der radialen Verschiebbarkeit des inneren Lagerrings 3 auf der Lagerlängsmittelachse L_{A} sowie die Höhe hᵥ des axialen Versatzes der beiden Lagerringe 2, 3 zueinander beträgt dabei, wie in Figur 5 angedeutet, jeweils etwa 25% der Breite der Laufbahnen 11, 12 der Lagerringe 2, 3 des Kugelrollenlagers 1, da somit gewährleistet ist, dass vom Einfüllen der ersten Kugelrolle 4 bis zum Einfüllen der letzten Kugelrolle 4 der Abstand a_{L} zwischen den Lagerringen 2, 3 immer größer als die Breite der b_{K} Kugelrollen 4 ist.

Wie in den Figuren 4 und 5 dargestellt, beginnt die Montage der Kugelrollen 4 zunächst damit, dass eine erste mit ihren Seitenflächen 5, 6 zu den Lagerringen 2, 3 ausgerichteten Kugelrolle 4 an die als Einfüllstelle 13 vorgesehene Stelle des größten Abstandes a_{L} zwischen den Lagerringen 2, 3 auf der Lagerlängsmittelachse L_{A} dem Kugelrollenlager 1 zugeführt und der innere Lagerring 3 um den Betrag sᵣ in eine exzentrische Anschlagstellung radial verschoben wird. Danach erfolgt ein aufeinander folgendes Einführen der Kugelrollen 4 in einer zum äußeren Lagerring 2 leicht angekippten Stellung in die Einfüllstelle 13 zwischen den Lagerringen 2, 3, bis der verbleibende freie Füllraum 14 zwischen den Lagerringen 2, 3 nur noch etwa dem Durchmesser d_{K} der Kugelgrundform einer einzelnen Kugelrolle 4 entspricht.

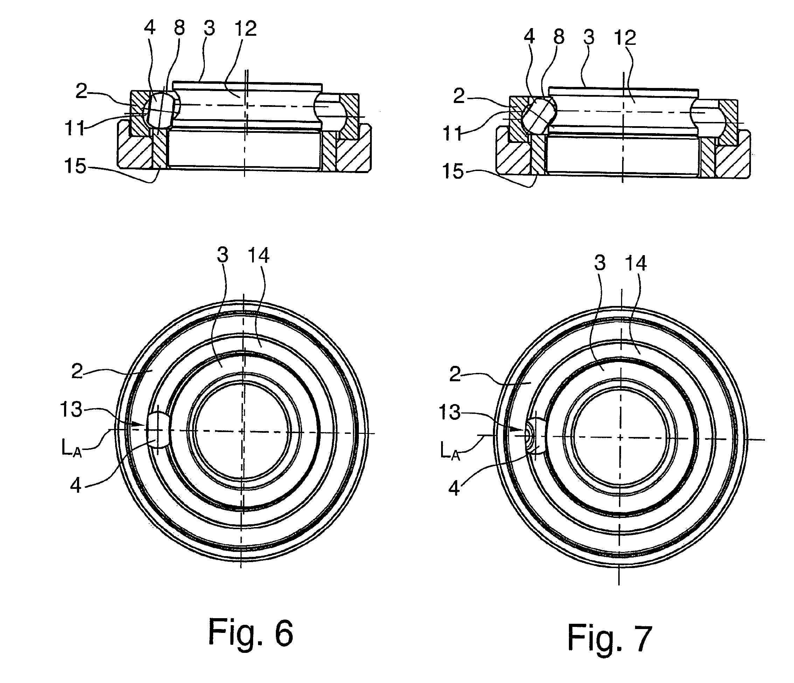

Zum zwischenzeitlichen Halten der eingefüllten Kugelrollen 4 im Abstand a_{L} zwischen den Lagerringen 2, 3 wird dabei eine zwischen den Lagerringen 2, 3 angeordnete ringförmige Stützebene 15 verwendet, die zunächst in einer Ebene mit der unteren Laufbahnkante des äußeren Lagerrings 2 angeordnet ist und bewirkt, dass die eingefüllten Kugelrollen 4 nach dem in den Figuren 5 und 6 angedeuteten anfänglichen Entlanggleiten auf sowie Herausgleiten aus der Laufbahn 12 des inneren Lagerrings 3 auf dieser Stützebene 15 so aufsetzen, dass die Kugelrollen 4, wie in Figur 7 dargestellt, mit ihren Laufflächen 8 selbsttätig in beide Laufbahnen 11, 12 der Lagerringe 2, 3 hinein kippen und beim Einfüllen der weiteren Kugelrollen 4 in dieser Stellung auf der Stützebene 15 entlang in den beidseitig der Einfüllstelle 13 angeordneten freien Füllraum 14 rollen.

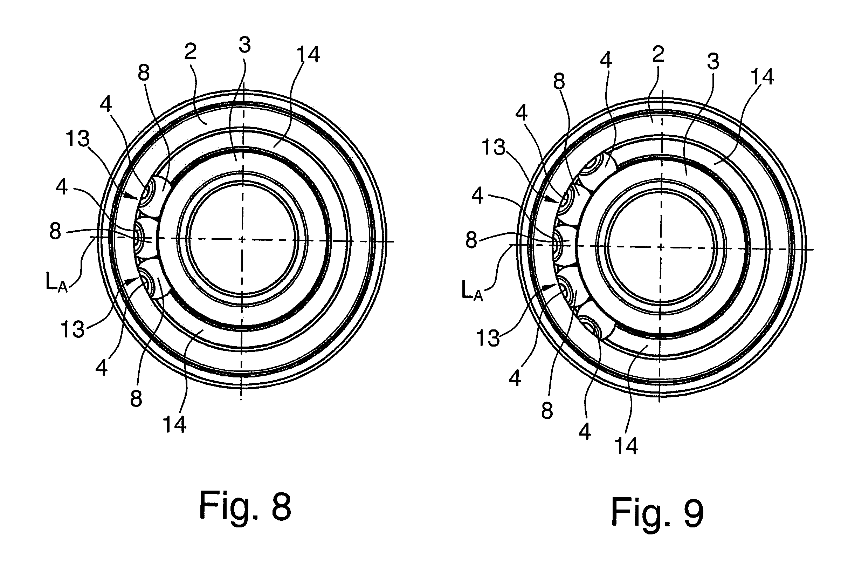

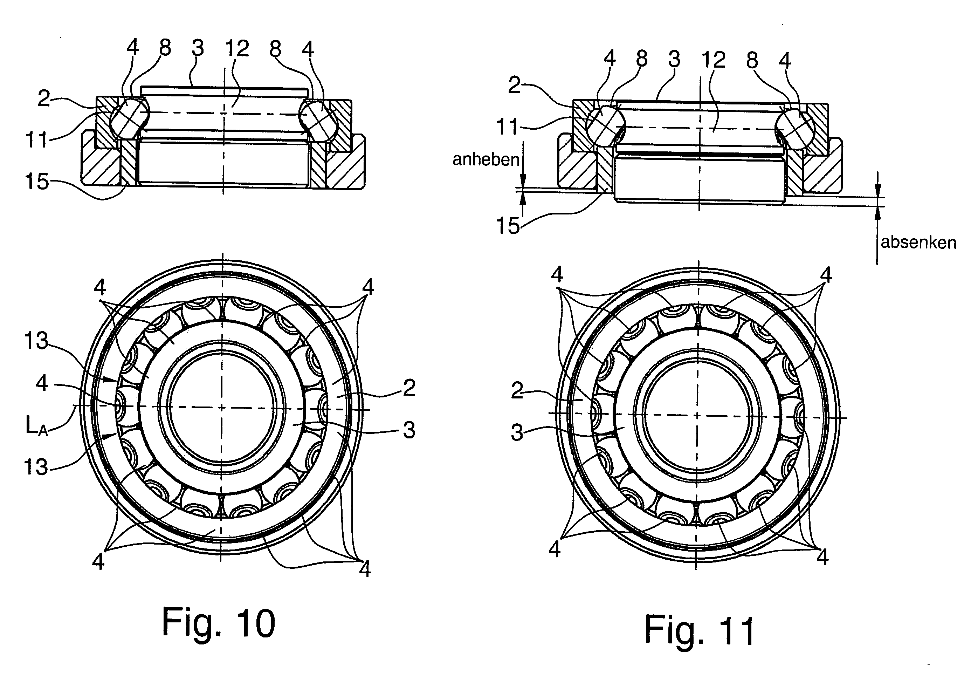

Die Figuren 8 und 9 verdeutlichen desweiteren, dass beim Einfüllen der weiteren Kugelrollen 4 die erste Kugelrolle 4 als Einfüllhilfe für die übrigen Kugelrollen 4 in der Einfüllstelle verbleibt, um das weitere Zu- und Einführen der übrigen Kugelrollen 4 bevorzugt paarweise durchzuführen. Dabei werden die übrigen Kugelrollen 4 mit ihren Laufflächen 8 beidseitig auf der Lauffläche 8 der ersten Kugelrolle 4 entlang gleitend in den Abstand a_{L} zwischen den Lagerringen 2, 3 eingedrückt, so dass die jeweils zuvor eingefüllten Kugelrollen 4 gleichmäßig in den noch freien Füllraum 14 zwischen den Lagerringen 2, 3 verdrängt werden. Damit die bereits eingefüllten Kugelrollen 4 im Abstand a_{L} zwischen den Lagerringen 2, 3 nicht durch die beim Einfüllen der weiteren Kugelrollen 4 eingebrachte Schubkraft unkontrolliert in den freien Füllraum 14 wegrollen bzw. sich querstellen, sind die Lagerringe 2, 3 dabei auf einer zur Einfüllstelle 13 der Kugelrollen 4 hin geneigten, in den Zeichnungen jedoch nicht näher dargestellten Ebene angeordnet, so dass die Kugelrollen 4 durch die wirkende Schwerkraft, wie in den Figuren 8 und 9 gezeigt, eine geordnet aneinander anliegende Reihe bilden. Mit zunehmender Anzahl der eingefüllten Kugelrollen 4 wird zudem, wie ebenfalls aus den Figuren 8 und 9 hervorgeht, der innere Lagerring 3 durch die Kugelrollen 4 aus seiner anfänglichen exzentrischen Anschlagstellung allmählich zurück geschoben, so dass, gemäß den Darstellungen der Figuren 10 und 11, nach dem Einfüllen der letzten Kugelrolle 4 der radiale Versatz des inneren Lagerrings 3 komplett aufgehoben ist und beide Lagerringe 2, 3 wieder konzentrisch zueinander angeordnet sind.

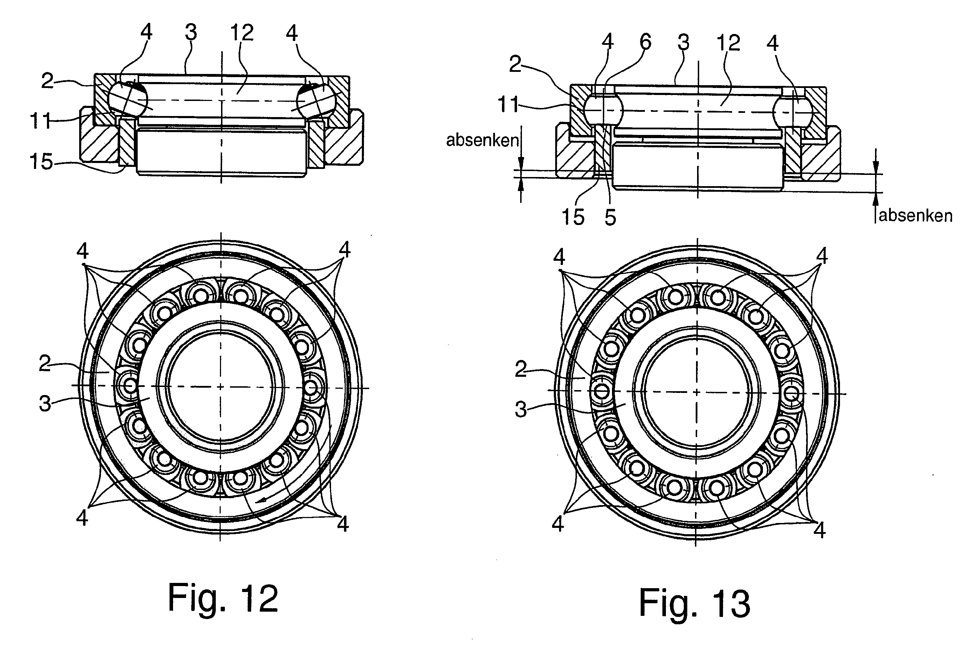

Nachdem dann alle vorgesehenen Kugelrollen 4 in das Kugelrollenlager eingefüllt wurden, erfolgt als nächster Verfahrensschritt das in Figur 11 dargestellte axiale Absenken des inneren Lagerrings 3 bei gleichzeitigem axialen Anheben des äußeren Lagerrings 2, so dass beide Lagerringe 2, 3 in einer gemeinsamen Ebene angeordnet und die in die Laufbahnen 11, 12 der Lagerringe 2, 3 gekippten Kugelrollen 4 zwischen den Laufbahnen 11, 12 eingespannt sind. In dieser Stellung wird der äußere Lagerrings 2 anschließend rotativ auf eine Drehzahl beschleunigt, bei der die Kugelrollen 4 durch Eigenrotation und durch Fliehkraft sich selbsttätig aufrichten und entsprechend der Darstellung in Figur 12 eine gleichmäßig schräge Stellung innerhalb der Laufbahnen 11, 12 der Lagerringe 2, 3 einnehmen.

Nach dem Anhalten des äußeren Lagerrings 2 erfolgt dann ein gleichzeitiges axiales Absenken des inneren Lagerrings 3 und des äußeren Lagerrings 2 bis die Kugelrollen 4, wie aus Figur 13 ersichtlich ist, in einer horizontal geraden Stellung in den Laufbahnen 11, 12 der Lagerringe 2, 3 angeordnet sind. Deutlich sichtbar werden die Kugelrollen 4 dabei durch die nunmehr in das Innere des Kugelrollenlagers 1 ragende Stützebene 15 in dieser horizontalen Stellung gehalten, so dass nach einem gleichmäßigen Verteilen der eingefüllten Kugelrollen 4 auf dem Teilkreis des Kugelrollenlagers 1 problemlos das in Figur 15 gezeigte Einsetzen des Lagerkäfigs 7 durch den Abstand a_{L} zwischen den Lagerringen 2, 3 hindurch erfolgen und das Kugelrollenlager 1 letztlich befettet und abgedichtet werden kann.

### Bezugszahlenliste

- 1: Kugelrollenlager
- 2: äußerer Lagerring
- 3: innerer Lagerring
- 4: Kugelrollen
- 5: Seitenfläche von 4
- 6: Seitenfläche von 4
- 7: Lagerkäfig
- 8: Laufflächen von 4
- 9: Innenseite von 2
- 10: Außenseite von 3
- 11: Laufbahn in 9
- 12: Laufbahn in 10
- 13: Einfüllstelle
- 14: Füllraum
- 15: Stützebene
- b_{K}: Breite von 4
- t_{LA}: Tiefe von 11
- t_{LI}: Tiefe von 12
- d_{K}: Durchmesser von 4
- a_{L}: Abstand zwischen 2 und 3
- L_{A}: Lagerlängsmittelachse
- sᵣ: Weg radialer Verschiebbarkeit von 3
- hᵥ: Höhe axialer Versatz zwischen 2 und 3

## Patentansprüche

1. Verfahren zum Befüllen eines Kugelrollenlagers mit Wälzkörpern, welches Kugelrollenlager (1) im Wesentlichen aus einem äußeren Lagerring (2) und einem inneren Lagerring (3) sowie aus einer Vielzahl zwischen diesen Lagerringen (2, 3) angeordneter Kugelrollen (4) besteht, die jeweils zwei symmetrisch von einer Kugelgrundform abgeflachte, parallel zueinander angeordnete Seitenflächen (5, 6) aufweisen und durch einen Lagerkäfig (7) in Umfangsrichtung in gleichmäßigen Abständen zueinander gehalten werden, wobei die Kugelrollen (4) zwischen ihren Seitenflächen (5, 6) eine Breite (b_{K}) von etwa 70% des Durchmessers (d_{K}) ihrer Kugelgrundform aufweisen und mit ihren Laufflächen (8) in zwei in die Innenseite (9) des äußeren Lagerrings (2) und in die Außenseite (10) des inneren Lagerrings (3) eingearbeitete rillenförmigen Laufbahnen (11, 12) abrollen, deren Tiefe (t_{LA}, t_{LI}) mit ca. 20% des Durchmessers (d_{K}) der Kugelgrundform der Kugelrollen (4) bemessen ist, während der Abstand (a_{L}) zwischen der Innenseite (9) des äußeren Lagerrings (2) und der Außenseite (10) des inneren Lagerrings (3) nur etwa 60% des Durchmessers (d_{K}) der Kugelgrundform der Kugelrollen (4) beträgt, **gekennzeichnet durch** eine Axial-Kipp-Exzentermontage der Kugelrollen (4) **durch** den Abstand (a_{L}) zwischen den Lagerringen (2, 3) hindurch, bei welcher der innere Lagerring (3) der beiden in liegender konzentrischer Stellung zueinander angeordneten Lagerringe (2, 3) zur Herstellung eines größer als die Breite (b_{K}) der Kugelrollen (4) ausgebildeten Abstandes (a_{L}) zwischen den Lagerringen (2, 3) zum einen entlang einer Lagerlängsmittelachse (L_{A}) radial geringfügig beweglich sowie zum anderen auf einer axial versetzt höheren Ebene als der äußere Lagerring (2) angeordnet ist, mit folgenden Schritten:
a) radiales Verschieben des inneren Lagerrings (3) in eine exzentrische Anschlagstellung und Zuführen der mit ihren Seitenflächen (5, 6) zu den Lagerringen (2, 3) ausgerichteten Kugelrollen (4) an die als Einfüllstelle (13) vorgesehene Stelle des größten Abstandes (a_{L}) zwischen den Lagerringen (2, 3) auf der Lagerlängsmittelachse (L_{A});
b) Aufeinander folgendes Einführen der Kugelrollen (4) in einer zum äußeren Lagerring (2) leicht angekippten Stellung in die Einfüllstelle (13) zwischen den Lagerringen (2, 3) bis der verbleibende freie Füllraum (14) zwischen den Lagerringen (2, 3) nur noch etwa dem Durchmesser (d_{K}) der Kugelgrundform einer einzelnen Kugelrolle (4) entspricht;
c) axiales Absenken des inneren Lagerrings (3) und gleichzeitiges axiales Anheben des äußeren Lagerrings (2) in eine Stellung, in der die Lagerringe (2, 3) in einer gemeinsamen Ebene angeordnet und die in die Laufbahnen (11, 12) der Lagerringe (2, 3) gekippten Kugelrollen (4) zwischen den Laufbahnen (11, 12) eingespannt sind;
d) rotative Beschleunigung des äußeren Lagerrings (2) auf eine Drehzahl, bei der die Kugelrollen (4) **durch** Eigenrotation und **durch** Fliehkraft sich selbsttätig aufrichten und eine gleichmäßig schräge Stellung innerhalb der Laufbahnen (11, 12) der Lagerringe (2, 3) einnehmen;
e) Anhalten des äußeren Lagerrings (2) und gleichzeitiges axiales Absenken des inneren Lagerrings (3) und des äußeren Lagerrings (2) bis die Kugelrollen (4) in einer horizontal geraden Stellung in den Laufbahnen (11, 12) der Lagerringe (2, 3) angeordnet sind;
f) gleichmäßiges Verteilen der eingefüllten Kugelrollen (4) auf dem Teilkreis des Kugelrollenlagers (1) und Einsetzen des Lagerkäfigs (7) **durch** den Abstand (a_{L}) zwischen den Lagerringen (2, 3) hindurch mit abschließender Befettung und optionaler Abdichtung des Kugelrollenlagers (1).

2. Verfahren zum Befüllen eines Kugelrollenlagers nach Anspruch 1, **dadurch gekennzeichnet, dass** bevorzugt eine erste Kugelrolle (4) einzeln in die Einfüllstelle (13) zwischen den Lagerringen (2, 3) eingeführt wird und diese Kugelrolle (4) dann als Einfüllhilfe für die übrigen Kugelrollen (4) in der Einfüllstelle (13) verbleibt, um das weitere Zu- und Einführen der übrigen Kugelrollen (4) bevorzugt paarweise durchzuführen.

3. Verfahren zum Befüllen eines Kugelrollenlagers nach Anspruch 2, **dadurch gekennzeichnet, dass** beim paarweisen Einführen der übrigen Kugelrollen (4) diese mit ihren Laufflächen (8) beidseitig auf der Lauffläche (8) der ersten Kugelrolle (4) entlang gleitend in den Abstand (a_{L}) zwischen den Lagerringen (2, 3) eingedrückt werden und die jeweils zuvor eingefüllten Kugelrollen in den noch freien Füllraum (14) zwischen den Lagerringen (2, 3) verdrängen.

4. Verfahren zum Befüllen eines Kugelrollenlagers nach Anspruch 1, **dadurch gekennzeichnet, dass** der Weg (sᵣ) der radialen Verschiebbarkeit des inneren Lagerrings (3) auf der Lagerlängsmittelachse (L_{A}) sowie die Höhe (hᵥ) des axialen Versatzes der beiden Lagerringe (2, 3) zueinander jeweils etwa 25% der Breite der Laufbahnen (11, 12) des Kugelrollenlagers (1) beträgt.

5. Verfahren zum Befüllen eines Kugelrollenlagers nach Anspruch 1, **dadurch gekennzeichnet, dass** die axial höhenversetzte Anordnung beider Lagerringe (2, 3) bevorzugt auf einer zur Einfüllstelle (13) der Kugelrollen (4) hin geneigten Ebene erfolgt, um ein geordnetes Aneinanderanliegen der eingefüllten Kugelrollen (4) im Abstand (a_{L}) zwischen den Lagerringen (2, 3) durch Schwerkraft zu erzeugen.

6. Verfahren zum Befüllen eines Kugelrollenlagers nach Anspruch 1, **dadurch gekennzeichnet, dass** zum zwischenzeitlichen Halten der eingefüllten Kugelrollen (4) sowie zu deren horizontal gerader Ausrichtung im Abstand (a_{L}) zwischen den Lagerringen (2, 3) eine zwischen den Lagerringen (2, 3) angeordnete ringförmige Stützebene (15) verwendet wird, die in einer Ebene mit der unteren Laufbahnkante des äußeren Lagerrings (2) angeordnet ist.

7. Nach dem Verfahren gemäß Anspruch 1 befülltes Kugelrollenlager mit den Merkmalen des Oberbegriffs des Anspruchs 1, **dadurch gekennzeichnet, dass** bei aneinander anliegend angeordneten Kugelrollen (4) der Abstand zwischen einer ersten Kugelrolle (4) und einer letzten Kugelrolle (4) etwa dem Durchmessers (d_{K}) der Kugelgrundform einer Kugelrolle (4) entspricht.

8. Kugelrollenlager nach Anspruch 7, **dadurch gekennzeichnet, dass** das Kugelrollenlager (1), ausgehend von einem Füllgrad von ca. 60% für ein baugleiches Rillenkugellager, einen Füllgrad von bis zu ca. 94% aufweist und dass dessen Lebensdauer, ausgehend von einer Lebensdauer von 100% für ein baugleiches Rillenkugellager, bis zu etwa 253 % beträgt.

## Claims

1. Method for filling a ball roller bearing with rolling elements, which ball roller bearing (1) substantially comprises an outer bearing ring (2) and an inner bearing ring (3) and a plurality of ball rollers (4), which are arranged between these bearing rings (2, 3) and which each have two lateral faces (5, 6), symmetrically flattened from a basic spherical shape and arranged parallel to one another, and which are held at regular intervals from one another in a circumferential direction by a bearing cage (7), the ball rollers (4), between their lateral faces (5, 6), having a width (b_{K}) of approximately 70% of the diameter (d_{K}) of their basic spherical shape and with their bearing surfaces (8) rolling in two grooved raceways (11, 12) recessed into the inside (9) of the outer bearing ring (2) and into the outside (10) of the inner bearing ring (3), the depth (t_{LA}, t_{LI}) of which is designed with approximately 20% of the diameter (d_{K}) of the basic spherical shape of the ball rollers (4), whilst the interval (a_{L}) between the inside (9) of the outer bearing ring (2) and the outside (10) of the inner bearing ring (3) amounts to just approximately 60% of the diameter (d_{K}) of the basic spherical shape of the ball rollers (4), **characterized by** an axial-tilt eccentric assembly of the ball rollers (4) through the interval (a_{L}) between the bearing rings (2, 3), in which the inner bearing ring (3) of the two bearing rings (2, 3), arranged a horizontal concentric position relative to one another, is arranged so that firstly it is slightly moveable radially along a bearing longitudinal central axis (L_{A}) and secondly it is on an axially offset higher plane than the outer bearing ring (2) in order to create an interval (a_{L}) between the bearing rings (2, 3) that is greater than the width (b_{K}) of the ball rollers (4), comprising the following steps:
a) radial displacement of the inner bearing ring (3) into an eccentric limit position and feeding of the ball rollers (4) with their lateral faces (5, 6) oriented towards the bearing rings (2, 3) to the site of the maximum interval (a_{L}) between the bearing rings (2, 3) on the bearing longitudinal central axis (L_{A}) intended as the insertion point (13);
b) successive introduction of the ball rollers (4), in an attitude slightly tilted towards the outer bearing ring (2), into the insertion point (13) between the bearing rings (2, 3) until the free filling space (14) remaining between the bearing rings (2, 3) is just approximately equal to the diameter (d_{K}) of the basic spherical shape of an individual ball roller (4);
c) axial lowering of the inner bearing ring (3) and simultaneous axial raising of the outer bearing ring (2) into a position in which the bearing rings (2, 3) are located in a common plane and the ball rollers (4) tilted into the raceways (11, 12) of the bearing rings (2, 3) are held between the raceways (11, 12);
d) rotational acceleration of the outer bearing ring (2) to a speed at which the ball rollers (4) spontaneously right themselves under their own rotation and due to centrifugal force and assume a uniformly inclined attitude inside the raceways (11, 12) of the bearing rings (2, 3);
e) arresting of the outer bearing ring (2) and simultaneous axial lowering of the inner bearing ring (3) and of the outer bearing ring (2) until the ball rollers (4) are located in a horizontally level position in the raceways (11, 12) of the bearing rings (2, 3);
f) regular distribution of the inserted ball rollers (4) on the graduated circle of the ball roller bearing (1) and insertion of the bearing cage (7) through the interval (a_{L}) between the bearing rings (2, 3) with final greasing and optional sealing of the ball roller bearing (1)

2. Method for filling a ball roller bearing according to Claim 1, **characterized in that** a first ball roller (4) is preferably introduced individually into the insertion point (13) between the bearing rings (2, 3) and this ball roller (4) then remains in the insertion point (13) as insertion aid for the other ball rollers (4), in order to perform the further feed and introduction of the other ball rollers (4) preferably in pairs.

3. Method for filling a ball roller bearing according to Claim 2, **characterized in that** in introducing the other ball rollers (4) in pairs these are pressed into the interval (a_{L}) between the bearing rings (2, 3) with their bearing surfaces (8) on both sides sliding along on the bearing surface (8) of the first ball roller (4) and force the ball rollers previously inserted at any given time into the free filling space (14) still remaining between the bearing rings (2, 3).

4. Method for filling a ball roller bearing according to Claim 1, **characterized in that** the distance (sᵣ) of the radial displaceability of the inner bearing ring (3) on the bearing longitudinal central axis (L_{A}) and the height (hᵥ) of the axial offset of the two bearing rings (2, 3) in relation to one another in each case amounts to approximately 25% of the width of the raceways (11, 12) of the ball roller bearing (1).

5. Method for filling a ball roller bearing according to Claim 1, **characterized in that** the axially height-offset arrangement of the two bearing rings (2, 3) preferably occurs on a plane inclined towards the insertion point (13) of the ball rollers (4), in order for gravitational force to produce a well-ordered contiguous arrangement of the inserted ball rollers (4) in the interval (a_{L}) between the bearing rings (2, 3).

6. Method for filling a ball roller bearing according to Claim 1, **characterized in that** an annular support plane (15), which is arranged between the bearing rings (2, 3) and which is located in one plane with the lower edge of the raceway of the outer bearing ring (2), is used for temporarily holding the inserted ball rollers (4) and for orienting them horizontally level in the interval (a_{L}) between the bearing rings (2, 3).

7. Ball roller bearing having the features of the pre-characterizing part of Claim 1 filled by the method according to Claim 1, **characterized in that** with the ball rollers (4) arranged contiguously with one another the interval between a first ball roller (4) and a last ball roller (4) is approximately equal to the diameter (d_{K}) of the basic spherical shape a ball roller (4).

8. Ball roller bearing according to Claim 7, **characterized in that** the ball roller bearing (1), starting from a filling density of approximately 60% for a deep-groove ball bearing of equivalent construction, has a filling density of up to approximately 94% and that its service life, starting from a service life of 100% for a deep-groove ball bearing of equivalent construction, is up to approximately 253 %.

## Revendications

1. Procédé de remplissage d'un palier à rouleaux sphériques avec des corps de roulement, lequel palier à rouleaux sphériques (1) se compose essentiellement d'une bague de palier extérieure (2) et d'une bague de palier intérieure (3) ainsi que d'une pluralité de rouleaux sphériques (4) disposés entre ces bagues de palier (2, 3), qui présentent à chaque fois deux faces latérales (5, 6) aplaties de manière symétrique par rapport à une forme de base sphérique, disposées parallèlement l'une à l'autre, et qui sont maintenus à distance uniforme les uns des autres dans la direction périphérique par une cage de palier (7), les rouleaux sphériques (4) présentant entre leurs faces latérales (5, 6) une largeur (b_{K}) d'environ 70 % du diamètre (d_{K}) de leur forme de base sphérique et roulant avec leurs surfaces de roulement (8) dans deux pistes de roulement (11, 12) en forme de rainures pratiquées dans le côté intérieur (9) de la bague de palier extérieure (2) et dans le côté extérieur (10) de la bague de palier intérieure (3), dont la profondeur (t_{LA}, t_{LI}) est dimensionnée à environ 20% du diamètre (d_{K}) de la forme de base sphérique des rouleaux sphériques (4), tandis que la distance (a_{L}) entre le côté intérieur (9) de la bague de palier extérieure (2) et le côté extérieur (10) de la bague de palier intérieure (3) ne vaut qu'environ 60 % du diamètre (d_{K}) de la forme de base sphérique des rouleaux sphériques (4), **caractérisé par** un montage excentré basculant axialement des rouleaux sphériques (4) à travers la distance (a_{L}) entre les bagues de palier (2, 3), dans lequel la bague de palier intérieure (3) des deux bagues de palier (2, 3) disposées l'une par rapport à l'autre dans une position couchée concentrique, pour produire une distance (a_{L}) entre les bagues de palier (2, 3) supérieure à la largeur (b_{K}) des rouleaux sphériques (4), est disposée d'une part le long d'un axe médian longitudinal de palier (LA) de manière légèrement déplaçable radialement et d'autre part sur un plan décalé axialement plus haut que la bague de palier extérieure (2), comprenant les étapes suivantes :
a) déplacement radial de la bague de palier intérieure (3) dans une position de butée excentrée et acheminement des rouleaux sphériques (4) orientés avec leurs faces latérales (5, 6) vers les bagues de palier (2, 3) à l'endroit prévu en tant que point de remplissage (13) de la plus grande distance (a_{L}) entre les bagues de palier (2, 3) sur l'axe médian longitudinal de palier (L_{A}) ;
b) introduction successive des rouleaux sphériques (4) dans une position légèrement basculée par rapport à la bague de palier extérieure (2) dans la position de remplissage (13) entre les bagues de palier (2, 3) jusqu'à ce que l'espace de remplissage libre subsistant (14) entre les bagues de palier (2, 3) corresponde encore approximativement au diamètre (d_{K}) de la forme de base sphérique d'un rouleau sphérique individuel (4) ;
c) abaissement axial de la bague de palier intérieure (3) et soulèvement axial simultané de la bague de palier extérieure (2) dans une position dans laquelle les bagues de palier (2, 3) sont disposées dans un plan commun et les rouleaux sphériques (4) basculés dans les pistes de roulement (11, 12) des bagues de palier (2, 3) sont serrés entre les pistes de roulement (11, 12) ;
d) accélération rotative de la bague de palier extérieure (2) à une vitesse de rotation à laquelle les rouleaux sphériques (4) s'orientent automatiquement par rotation propre sous l'effet de la force centrifuge et adoptent une position oblique régulière à l'intérieur des pistes de roulement (11, 12) des bagues de roulement (2, 3) ;
e) arrêt de la bague de palier extérieure (2) et abaissement simultané axial de la bague de palier intérieure (3) et de la bague de palier extérieure (2) jusqu'à ce que les rouleaux sphériques (4) soient disposés dans une position droite horizontale dans les pistes de roulement (11, 12) des bagues de palier (2, 3) ;
f) répartition uniforme des rouleaux sphériques (4) sur le cercle partiel du palier à rouleaux sphériques (1) et insertion de la cage de palier (7) à travers la distance (a_{L}) entre les bagues de palier (2, 3) avec graissage subséquent et étanchéité optionnelle du palier à rouleaux sphériques (1).

2. Procédé de remplissage d'un palier à rouleaux sphériques selon la revendication 1, **caractérisé en ce que** de préférence un premier rouleau sphérique (4) est introduit individuellement dans le point de remplissage (13) entre les bagues de palier (2, 3) et ce rouleau sphérique (4) reste ensuite en tant qu'auxiliaire de remplissage pour les autres rouleaux sphériques (4) dans la position de remplissage (13) afin d'effectuer, de préférence par paire, l'apport et l'introduction subséquents des autres rouleaux sphériques (4).

3. Procédé de remplissage d'un palier à rouleaux sphériques selon la revendication 2, **caractérisé en ce que** lors de l'introduction par paire des autres rouleaux sphériques (4), ceux-ci sont enfoncés avec leurs surfaces de roulement (8) en roulant des deux côtés le long de la surface de roulement (8) du premier rouleau sphérique (4) dans la distance (a_{L}) entre les bagues de palier (2, 3) et repoussant les rouleaux sphériques préalablement remplis dans l'espace de remplissage encore libre (14) entre les bagues de palier (2, 3).

4. Procédé de remplissage d'un palier à rouleaux sphériques selon la revendication 1, **caractérisé en ce que** la course (Sᵣ) de mobilité radiale de la bague de palier intérieure (3) sur l'axe médian longitudinal de palier (LA) ainsi que la hauteur (hᵥ) du décalage axial des deux bagues de palier (2, 3) l'une par rapport à l'autre vaut à chaque fois environ 25 % de la largeur des pistes de roulement (11, 12) du palier à rouleaux sphériques (1).

5. Procédé de remplissage d'un palier à rouleaux sphériques selon la revendication 1, **caractérisé en ce que** l'agencement décalé en hauteur axialement des deux bagues de palier (2, 3) a lieu de préférence sur un plan incliné vers le point de remplissage (13) des rouleaux sphériques (4), afin de produire une application ordonnée des rouleaux sphériques remplis (4) les uns contre les autres dans la distance (a_{L}) entre les bagues de palier (2, 3), sous l'effet de la pesanteur.

6. Procédé de remplissage d'un palier à rouleaux sphériques selon la revendication 1, **caractérisé en ce que** pour le maintien temporaire des rouleaux sphériques remplis (4) ainsi que pour l'orientation droite horizontale dans la distance (a_{L}) entre les bagues de palier (2, 3), on utilise un plan d'appui (15) de forme annulaire disposé entre les bagues de palier (2, 3), lequel est disposé dans un plan avec l'arête de la piste de roulement inférieure de la bague de palier extérieure (2).

7. Palier à rouleaux sphériques rempli selon un procédé selon la revendication 1, comprenant les caractéristiques du préambule de la revendication 1, **caractérisé en ce que** lorsque des rouleaux sphériques (4) sont disposés en appui les uns contre les autres, la distance entre un premier rouleau sphérique (4) et un dernier rouleau sphérique (4) correspond approximativement au diamètre (d_{K}) de la forme de base sphérique d'un rouleau sphérique (4).

8. Palier à rouleaux sphériques selon la revendication 7, **caractérisé en ce que** le palier à rouleaux sphériques (1), partant d'un degré de remplissage d'environ 60 % pour un roulement à billes rainuré de même construction, présente un degré de remplissage allant jusqu'à 94 % et **en ce que** sa durée de vie, partant d'une durée de vie de 100 % pour un roulement à billes rainuré de même construction, vaut jusqu'à environ 253 %.
